# EUROPÄISCHE PATENTSCHRIFT

(11) **EP 3 573 851 B1**
(45) Veröffentlichungstag und Bekanntmachung des Hinweises auf die Patenterteilung: **20.01.2021**
(21) Anmeldenummer: 17825482.7
(22) Anmeldetag: 18.12.2017
(51) Int. Cl.: B60G 7/00

(54) **GELENKGABEL UND AKTUATOR MIT GELENKGABEL**
FORK FOR ARTICULATION AND ACTUATOR WITH A FORK FOR AN ARTICULATION
FOURCHE POUR ARTICULATION ET ACTUATEUR AVEC UNE TELLE FOURCHE

(30) Priorität: 27.01.2017 DE 102017201352
(43) Veröffentlichungstag der Anmeldung: 04.12.2019
(73) Patentinhaber: ZF Friedrichshafen AG, 88046 Friedrichshafen (DE)
(72) Erfinder: KUHNT, Torsten, 49356 Diepholz (DE)
(74) Vertreter: ZF Friedrichshafen AG
(86) Internationale Anmeldenummer: PCT/EP2017/083216
(87) Internationale Veröffentlichungsnummer: WO 2018/137850

(56) Entgegenhaltungen:
- DE-A1- 3 441 560
- DE-A1-102014 206 934
- DE-A1-102015 211 414
- US-A- 5 238 262
- US-A1- 2007 278 778

## Beschreibung

Die Erfindung betrifft eine Gelenkgabel zur Verbindung mit einem Gelenk sowie einen Aktuator für eine Hinterachslenkung nach den Oberbegriffen der Haupt- und nebengeordneten Patentansprüche.

Durch die DE 10 2015 211 414 A1 der Anmelderin wurde eine Gelenkgabel zur Verbindung mit einer Gelenkstange, insbesondere einem Quer- oder Spurlenker bekannt. Die Gelenkgabel weist einen Steg mit einer Durchgangsbohrung sowie zwei parallel zueinander angeordnete Schenkel oder Wangen auf, welche eine leichte Neigung aufweisen. Innerhalb der Gabel, d. h. zwischen beiden Wangen ist ein Gelenk in Form eines Gummilagers angeordnet, welches mit dem Spurlenker verbunden ist. Alternativ könnte dort auch ein Kugelgelenk, wie z.B. ein Kugelhülsengelenk, verbaut werden. Die Gelenkgabel ist über einen die Durchgangsbohrung durchsetzenden Schraubbolzen mit einem Einschraub- oder Steckzapfen verbunden. Probleme können sich dann ergeben, wenn die Wangen der Gelenkgabel stärker gegenüber der Achse des Schraubbolzens bzw. des Steckzapfens geneigt sein sollen, z. B. aufgrund von Einbaubedingungen eines Aktuators für eine Hinterachslenkung eines Kraftfahrzeuges. Diese Probleme sind insbesondere fertigungstechnischer Art, weil die spangebende Bearbeitung des Steges erschwert ist.

Ein Aktuator für eine Hinterachslenkung wurde durch die DE 10 2014 206 934 A1 der Anmelderin bekannt. Der Aktuator weist einen elektromotorisch angetriebenen Spindelantrieb mit einer Spindel auf, deren Enden mit so genannten Aufschraubzapfen verbunden sind, die ihrerseits mit Gelenkgabeln verbunden sind. Der bekannte Aktuator ist als zweiseitig wirkender Steller ausgebildet und in der Mitte des Fahrzeuges zwischen beiden Hinterrädern angeordnet. Die Gabeln sind jeweils über Spurgestänge mit den Radträgern der Hinterräder verbunden. Die Aufschraubzapfen, auch Lagerhülsen genannt, sind über Gleitlager gegenüber dem Gehäuse des Aktuators längs verschiebbar gelagert.

Die Gelenkgabel der eingangs genannten Art soll an geänderte Einbaubedingungen angepasst werden. Ein Lenker für ein Fahrwerk oder ein Aktuator für eine Hinterachslenkung mit Gelenkgabeln soll des Weiteren an geänderte Einbaubedingungen angepasst werden.

Nach einem ersten Aspekt der Erfindung sind die Schenkel oder Wangen der Gelenkgabel, zusammen mit dem Steg, auch kurz Gabel genannt, stark geneigt gegenüber der Längsachse der Befestigungsbohrung angeordnet. Der Neigungswinkel der Wangen zur Längsachse liegt dabei im Bereich von 20° bis 70°, vorzugsweise bei 30°. Dadurch ergeben sich weitere Anwendungsmöglichkeiten für die Gelenkgabel, z. B. als Verbindungsglied zwischen Gliedern einer kinematischen Kette. Mit der Gelenkgabel kann z.B. über ein Gelenk, wie z.B. ein Kugel- oder Kugelhülsengelenk, ein Radträger oder ein Lenker dreh- und/oder schwenkbeweglich verbunden sein. Bei einer Hinterradlenkung kann die Linearbewegung des Aktuators oder Stellers über die kinematische Kette in eine Lenkbewegung des Radträgers und somit des Rades übertragen werden.

Die Gabel ist zumindest zweistückig oder mehrteilig ausgebildet, wobei eine der beiden Wangen als separates Bauteil ausgebildet ist. Die Wange ist separat herstellbar. Es liegt somit eine gebaute Gabel vor, die aus einem Grundkörper bestehend aus einem Steg mit einer einstückig verbunden Wange und der separat hergestellten Wange besteht. Aufgrund der Zweiteiligkeit der Gabel kann die Befestigungsbohrung und eine koaxial dazu angeordnete Auflagefläche für den Schraubbolzen auf einfache und damit preisgünstige Weise spangebend hergestellt werden. Darüber hinaus ergeben sich Vorteile bei der Montage des zugehörigen Gelenks, insbesondere eines Gummilagers, welches in dem Gelenk, z.B. durch Einpressen, eingebaut wird, weil das separate Bauteil biegeweicher als die gegenüberliegende Wange ausgebildet ist. Das Gummilager kann zwischen den beiden Wangen eingespannt werden. Somit können auch größere Toleranzen für die Maulweite der Gabel zugelassen werden. Die Maulweite ergibt sich aus dem Abstand der Wangen zueinander. Die Wangen sind vorzugsweise annähernd, höchst vorzugsweise genau parallel zueinander angeordnet.

Nach einer weiteren bevorzugten Ausführungsform ist das separate Bauteil, d. h. die separate Wange mit dem Steg des Grundkörpers verschraubbar. Damit ist eine einfache Verbindungs- und Befestigungsmöglichkeit für beide Teile gegeben, um die Gelenkgabel zu bilden.

Nach einer weiteren bevorzugten Ausführungsform weist der Steg an seiner Schnittstelle eine Anlagefläche Sacklöcher mit Innengewinde bzw. mit Gewindebohrungen auf, in welche Befestigungsschrauben einschraubbar sind. Die Befestigungsschrauben durchsetzen Durchbrüche des separaten Bauteils (Wange), welches somit eine kraftschlüssige Verbindung bzw. Klemmverbindung mit dem Steg der Gelenkgabel bildet.

Nach einer weiteren bevorzugten Ausführungsform ist das separate Bauteil als Blechteil herstellbar, beispielsweise durch Umformen wie Stanzprägen mit einem entsprechenden Versteifungsprofil, was eine preisgünstige Herstellung erlaubt.

Nach einer weiteren bevorzugten Ausführungsform ist der Grundkörper der Gelenkgabel, einstückig bestehend aus Steg und einer Wange - ohne das separate Bauteil - als Schmiedeteil herstellbar. Damit erhält die Gelenkgabel die notwendige Festigkeit. Darüber hinaus kann dieses Schmiedeteil durch Änderung der Schmiederichtung einfacher entformt werden, so dass sich einerseits ein leichterer Rohling und andererseits ein geringeres Zerspanungsvolumen ergeben. Dies spart Material und Fertigungskosten.

Nach einer weiteren bevorzugten Ausführungsform sind die Wange und der Steg des Schmiedeteils (Grundkörper) über ein Bogenstück miteinander verbunden, wobei im Bereich des Bogenstücks ein Befestigungsstutzen mit der Befestigungsbohrung angeordnet ist. Über diesen Befestigungsstutzen kann die Gelenkgabel mittels eines Schraubbolzens mit einem weiteren Bauteil, beispielsweise einem Einschraubzapfen eines Aktuators oder einem Achsträger oder einem Radträger verbunden werden. Alternativ kann die Gelenkgabel auch an einem Lenker, z. B. einem Spur- oder Querlenker befestigt und das Gummilager an dem Aktuator, dem Achsträger oder dem Radträger angeordnet werden.

Bevorzugt weisen die Wangen der Gelenkgabeln an ihren Innenflächen zumindest bereichsweise eine Rändelung auf. Dies bewirkt eine höhere Reibung mit dem Verbindungsbauteil, so dass ein Rutschen der Schraubverbindung vermieden wird. Mit anderen Worten kann die Schraubverbindung kleiner ausfallen, da aufgrund der Rändelung geringere Anzugsmomente gewählt werden können.

Nach einem weiteren Aspekt der Erfindung ist ein Aktuator mit einem Spindeltrieb mit mindestens einer Gelenkgabel versehen, welche die oben erwähnten Merkmale aufweist, insbesondere zumindest zweistückig oder mehrteilig ausgebildet ist. Beim Einbau eines Aktuators für die Hinterachslenkung eines Kraftfahrzeuges, vorzugsweise eines beidseitig wirkenden Aktuators mit zwei Gabeln kann es sich ergeben, dass die Spurlenker, welche an die beiden Gabeln des Aktuators angelenkt sind, einen größeren Winkel, beispielsweise jeweils 30° mit der Spindelachse des Aktuators bilden. Dadurch, dass die Wangen der Gelenkgabeln den gleichen Neigungswinkel wie die Spurlenker aufweisen, kann diese Einbaulage im Kraftfahrzeug realisiert werden. Insbesondere ergibt sich vorteilhafter Weise, z.B. entgegen der Fahrtrichtung, zusätzlicher Bauraum im Kraftfahrzeug. Mit anderen Worten kann mit Rücksicht auf weitere Fahrwerks- oder Antriebsbauteile der Aktuator entfernt von der Hinterachse eingebaut werden. Eine unmittelbare, sehr achsnahe Platzierung des Aktuators ist nicht erforderlich.

Nach einer weiteren bevorzugten Ausführungsform ist die Gelenkgabel über einen die Befestigungsbohrung durchsetzenden Schraubbolzen mit dem Aufschraubzapfen des Aktuators verbunden. Damit kann die Gabel mit den sich linear bewegenden Bauteilen des Aktuators, zumindest mit der Spindel wie bisher, vorzugsweise durch Verschraubung, angebunden werden.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
Fig. 1 eine Ansicht einer erfindungsgemäßen Gelenkgabel,
Fig. 2 einen Schnitt in der Ebene II-II in Fig. 1 und 4,
Fig. 3 eine Ansicht auf die Gelenkgabel von unten,
Fig. 4 eine Seitenansicht der Gelenkgabel,
Fig. 5 eine perspektivische Darstellung der Gelenkgabel und
Fig. 6 einen Aktuator mit montierten Gelenkgabeln.

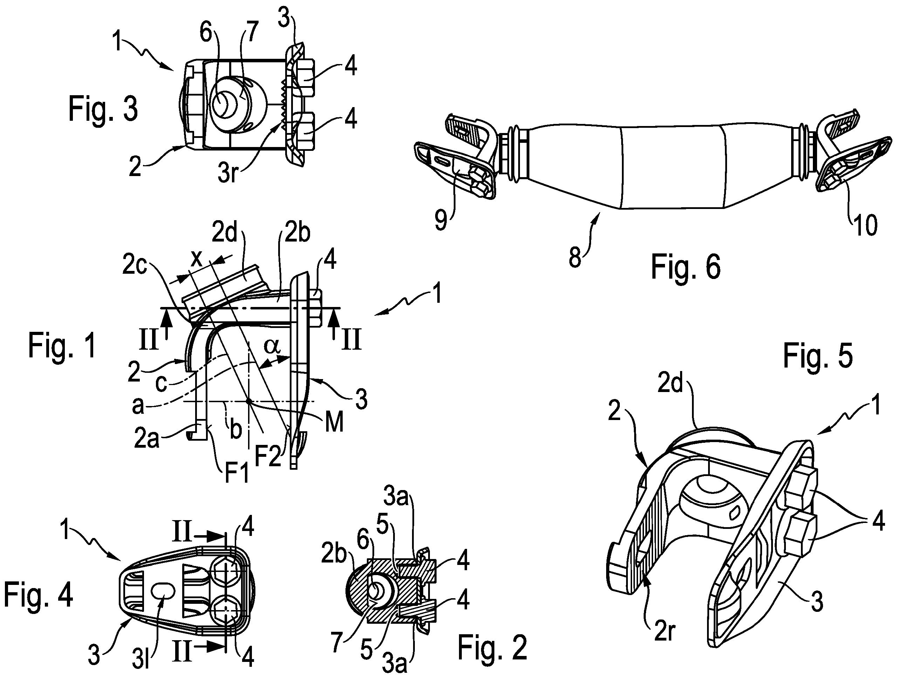

Fig. 1 zeigt eine erfindungsgemäße Gelenkgabel 1, welche vorzugsweise für eine Hinterachslenkung eines Kraftfahrzeuges verwendbar ist, d. h. zur Verbindung oder Anbindung an einen Aktuator. Hierzu wird auf die eingangs erwähnte DE 10 2014 206 934 A1 der Anmelderin verwiesen. Die Gelenkgabel 1 ist zweistückig ausgebildet, d. h. sie wird aus zwei Teilen, einem Schmiedeteil 2, der einen Grundkörper bildet, und einem separat herstellbaren Blechteil 3, zusammengesetzt; beide Teile 2, 3 werden über Befestigungsschrauben 4 fest miteinander verbunden, so dass aus dem Grundkörper/Schmiedeteil und der separaten Wange eine Gelenkgabel mit zwei Wangen, oder anders bezeichnet Schenkeln, gebildet wird. Das Schmiedeteil 2 weist eine erste Wange 2a, einen Steg 2b sowie ein die erste Wange 2a und den Steg 2b verbindendes Bogenstück 2c auf, so dass das Schmiedeteil 2 etwa L-förmig ausgebildet ist. Das als Blechteil ausgebildete separate Bauteil 3 bildet die zweite Wange 3. Die beiden Wangen 2a, 3 weisen im Wesentlichen parallel angeordnete Innenflächen F1, F2 auf. Im Bereich des Bogenstücks 2c und teilweise im Bereich des Steges 2b ist ein Befestigungsstutzen 2d angeordnet, der einstückig mit dem Schmiedeteil 2 ausgebildet, d. h. angeschmiedet ist. Innerhalb des Befestigungsstutzens 2d verläuft eine in Fig. 1 nicht dargestellte Befestigungsbohrung mit der Längsachse a, welche mit der Innenfläche F2 der zweiten Wange 3 einen Neigungswinkel α bildet. In den beiden Wangen 2a, 3 sind nicht dargestellte Durchbrüche mit einer gemeinsamen Achse b angeordnet. Die Durchbrüche dienen der Aufnahme eines nicht dargestellten Schraubbolzens zur Befestigung eines Gummilagers eines Lenkers, wie es z. B. aus der eingangs genannten DE 10 2015 211 414 A1 der Anmelderin bekannt ist - dort wird insbesondere auf Fig. 2b verwiesen.

Der oben erwähnte Neigungswinkel α liegt in einem Bereich von 20° ≤ α ≤ 70°, bevorzugt bei ca. 30°. Damit ist es möglich, einen mittig im Fahrzeug angeordneten Aktuator 8 (Fig. 6) kinematisch wirksam mit einem Schrägungswinkel von etwa 30° (-20°, + 40°) gegenüber der Quer- oder y-Achse des Fahrzeuges gelenkig zu verbinden. Wie aus Fig. 1 ersichtlich, ergibt sich dabei ein Versatz x der Spindelachse, die der Längsachse a entspricht, und der sogenannten kinematischen Achse c, welche die Achse b des Gummilagers in deren Mittelpunkt M, auch Kinematikpunkt genannt, schneidet. Der Versatz x ist darauf zurückzuführen, dass die Spindelachse a aus Platzgründen im Fahrzeug nach hinten, d. h. entgegen der Fahrtrichtung verschoben wurde. Die Kinematikachse c ist somit nicht mehr identisch mit der Spindelachse a.

Fig. 2 zeigt einen Schnitt in der Ebene II-II in Fig. 1 (und Fig. 4), d. h. im Bereich der Befestigung des separaten Bauteils 3 mit dem Steg 2b. Das separate Bauteil 3 ist als profiliertes Blechteil 3 ausgebildet und weist zwei Durchbrüche 3a auf, durch welche die Befestigungsschrauben 4 gesteckt und in Gewindelöcher- bzw. bohrungen 5 des Steges 2b eingeschraubt sind. In der Schnittdarstellung sind ferner die Befestigungsbohrung 6 und eine kreisringförmige Auflagefläche 7 für den Schraubenkopf eines Schraubbolzens (nicht dargestellt) erkennbar.

Fig. 3 zeigt eine Ansicht der gebauten Gabel 1 mit Schmiedeteil 2, Wange 3 als separates Bauteil und Befestigungsschrauben 4 von unten. Die Befestigungsbohrung 6 und die spangebend bearbeitete Auflagefläche 7 für den Schraubbolzen sind ebenfalls erkennbar. Die Wange 3 weist ein Loch 31 auf (siehe auch Fig. 4) zum Durchstecken eines Bolzens oder einer Schraube für die bereits erwähnte Verbindung mit Radträger bzw. Lenker bzw. Kugel- oder Kugelhülsengelenk. Um dieses Loch herum ist auf der Innenseite der zweiten Wange 3, also der ersten Wange 2a des Grundkörpers 2 zugeneigt, eine Rändelung 2r eingeformt, z.B. durch Rollen. Diese Rändelung verhindert nach der Montage der Gabel mit den vorgenannten Bauteilen ein Rutschen der Bauteile bzw. der Verbindung zueinander. Auch kann so eine geringere Schrauben- bzw. Schraubenkopfgröße bei der Montage verwendet werden.

Fig. 4 zeigt eine Seitenansicht der Gelenkgabel 1 mit Blick auf das separate Bauteil 3 und die Befestigungsschrauben 4.

Fig. 5 zeigt eine perspektivische Darstellung der gebauten Gelenkgabel 1 mit Schmiedeteil 2, der zweiten Wange 3 als separates Bauteil, Befestigungsschrauben 4 sowie dem angeschmiedeten Befestigungsstutzen 2d. Die erste Wange 2a am Schmiedeteil bzw. Grundkörper 2 weist an ihrer gesamten, der Innenfläche der zweiten Wange 3 zugeneigten Innenfläche ebenfalls eine Rändelung 3r auf. Diese Rändelung kann nach dem Entformen aus dem Schmiedewerkzeug mittels Umformen, z. B. Rollen vorgenommen werden. Eine solche Rändelung wäre bei einer Schmiedegabel mit zwei Wangen nur sehr schwer bzw. sehr aufwendig umsetzbar.

Fig. 6 zeigt einen Aktuator 8 mit zwei montierten Gelenkgabeln 9, 10, welche der oben beschriebenen Gabel 1 entsprechen. Der Aktuator 8 weist -wie aus dem Stand der Technik bekannt - einen hier nicht sichtbaren Spindellinearantrieb mit einer Spindel auf, deren Enden über Aufschraubzapfen mit den Gabeln 9, 10 verbunden sind. An die Gabeln 9, 10 sind über Gummilager direkt Radträger oder mittels Lenker wie z.B. Spurlenker verbindbar bzw. anschließbar. Bei einer Linearverschiebung der Spindel kann so auf die Radträger eine Lenkbewegung gegeben werden.

### Bezugszeichen

- 1: Gelenkgabel/Gabel
- 2: Schmiedeteil/Grundkörper
- 2a: erste Wange
- 2b: Steg
- 2c: Bogenstück
- 2d: Befestigungsstutzen
- 2r: Rändelung
- 3: separates Bauteil/zweite Wange
- 3a: Durchbruch
- 3l: Loch
- 3r: Rändelung
- 4: Befestigungsschraube
- 5: Gewindebohrung
- 6: Befestigungsbohrung
- 7: Auflagefläche
- 8: Aktuator
- 9: erste Gabel
- 10: zweite Gabel

- a: Längsachse
- b: Gelenkachse
- c: kinematische Achse
- F1: Innenfläche, erste Wange
- F2: Innenfläche, zweite Wange
- M: Mittelpunkt/ Kinematikpunkt
- x: Versatz
- α: Neigungswinkel

## Patentansprüche

1. Gelenkgabel für einen Lenker oder eine Hinterachslenkung zur Verbindung mit einem Gelenk, aufweisend zwei etwa vorzugsweise genau parallel zueinander angeordnete Wangen (2a, 3) mit Wangenflächen (F1, F2), einen die Wangen (2a, 3) miteinander verbindenden Steg (2b) sowie eine im Steg (2b) angeordnete, eine Längsachse (a) aufweisende Befestigungsbohrung (6), wobei die Wangenflächen (F1, F2) mit der Längsachse (a) einen Neigungswinkel α bilden und dass der Neigungswinkel α im Bereich von 20° bis 70°, vorzugsweise bei 30° liegt, **dadurch gekennzeichnet, dass** die Gelenkgabel (1) zweistückig ausgebildet und eine Wange als separates Bauteil (3) ausgebildet ist.

2. Gelenkgabel nach Anspruch 1, **dadurch gekennzeichnet, dass** das separate Bauteil (3) mit dem Steg (2b) der Gelenkgabel (1) verschraubbar ist.

3. Gelenkgabel nach Anspruch 2, **dadurch gekennzeichnet, dass** der Steg (2b) Gewindebohrungen (5) aufweist und dass in die Gewindebohrungen (5) Befestigungsschrauben (4) zur Befestigung des separaten Bauteils (3) einschraubbar sind.

4. Gelenkgabel nach Anspruch 1, 2 oder 3, **dadurch gekennzeichnet, dass** das separate Bauteil als Blechteil (3) herstellbar ist.

5. Gelenkgabel nach einem der Ansprüche 1 bis 4, **dadurch gekennzeichnet, dass** die Gelenkgabel (1), ohne das separate Bauteil (3), als Schmiedeteil (2) herstellbar ist.

6. Gelenkgabel nach Anspruch 5, **dadurch gekennzeichnet, dass** die erste Wange (2a) und der Steg (2b) des Schmiedeteils (2) über ein Bogenstück (2c) ineinander übergehen und dass im Bereich des Bogenstücks (2c) ein koaxial zur Längsachse (a) der Befestigungsbohrung (6) angeordneter Befestigungsstutzen (2d) angeordnet ist.

7. Gelenkgabel nach einem der vorhergehenden Ansprüche, **dadurch gekennzeichnet, dass** die Innenflächen der Wangen zumindest bereichsweise eine Rändelung aufweisen.

8. Aktuator (8) mit einem eine Spindel aufweisenden Spindelantrieb für eine Hinterachslenkung eines Kraftfahrzeuges, umfassend mindestens eine mit der Spindel verbundene Gelenkgabel (9, 10), **dadurch gekennzeichnet, dass** die mindestens eine Gelenkgabel (9, 10) nach einem der vorhergehenden Ansprüche ausgebildet ist.

9. Aktuator nach Anspruch 8, **dadurch gekennzeichnet, dass** die mindestens eine Gelenkgabel (9, 10) über einen die Befestigungsbohrung (6) durchsetzenden Schraubbolzen mit einem Aufschraubzapfen der Spindel verbunden ist.

## Claims

1. Joint yoke for a suspension link or a rear-axle steering system for connection to a joint, having two approximately, preferably precisely, parallel sidepieces (2a, 3) with sidepiece surfaces (F1, F2), having a crosspiece (2b), which connects the sidepieces (2a, 3) to one another, and having a fastening bore (6), which is arranged in the crosspiece (2b) and has a longitudinal axis (a), wherein the sidepiece surfaces (F1, F2) form an angle of inclination α with the longitudinal axis (a), and in that the angle of inclination α ranges from 20° to 70°, and is preferably 30°, **characterized in that** the joint yoke (1) is formed in two parts and one sidepiece is designed in the form of a separate component (3).

2. Joint yoke according to Claim 1, **characterized in that** the separate component (3) can be screwed to the crosspiece (2b) of the joint yoke (1).

3. Joint yoke according to Claim 2, **characterized in that** the crosspiece (2b) has threaded bores (5), and **in that** fastening screws (4) can be screwed into the threaded bores (5) in order to fasten the separate component (3).

4. Joint yoke according to Claim 1, 2 or 3, **characterized in that** the separate component can be produced in the form of a sheet-metal part (3).

5. Joint yoke according to one of Claims 1 to 4, **characterized in that** the joint yoke (1), without the separate component (3), can be produced in the form of a forged part (2).

6. Joint yoke according to Claim 5, **characterized in that** the first sidepiece (2a) and the crosspiece (2b) of the forged part (2) merge into one another via a curved piece (2c), and **in that** a fastening neck (2d) is arranged, coaxially in relation to the longitudinal axis (a) of the fastening bore (6), in the region of the curved piece (2c) .

7. Joint yoke according to one of the preceding claims, **characterized in that** at least certain regions of the inner surfaces of the crosspieces are knurled.

8. Actuator (8) having a spindle-containing spindle drive for a rear-axle steering system of a motor vehicle, comprising at least one joint yoke (9, 10) connected to the spindle, **characterized in that** the at least one joint yoke (9, 10) is designed according to one of the preceding claims.

9. Actuator according to Claim 8, **characterized in that** at least one joint yoke (9, 10) is connected to a screw-on pin of the spindle via a threaded bolt which passes through the fastening bore (6).

## Revendications

1. Fourche d'articulation destinée à une biellette ou une direction d'essieu arrière pour la liaison à une articulation et comprenant deux joues (2a, 3), disposées de préférence exactement parallèlement l'une à l'autre et pourvues de surfaces de joue (F1, F2), une nervure (2b) reliant les joues (2a, 3) l'une à l'autre ainsi qu'un trou de fixation (6) ménagé dans la nervure (2b) et comportant un axe longitudinal (a), les surfaces de joue (F1, F2) formant avec l'axe longitudinal (a) un angle d'inclinaison α et en ce que l'angle d'inclinaison α est dans la plage allant de 20° à 70°, de préférence est de 30°, **caractérisée en ce que** la fourche articulée (1) est réalisée en deux parties et une joue est conçue comme un composant séparé (3).

2. Fourche d'articulation selon la revendication 1, **caractérisée en ce que** le composant séparé (3) peut être vissé sur la nervure (2b) de la fourche d'articulation (1).

3. Fourche d'articulation selon la revendication 2, **caractérisée en ce que** la nervure (2b) comporte des alésages filetés (5) et **en ce que** des vis de fixation (4) destinées à la fixation du composant séparé (3) peuvent être vissées dans les alésages filetés (5).

4. Fourche d'articulation selon la revendication 1, 2 ou 3, **caractérisée en ce que** le composant séparé peut être réalisé sous la forme d'une pièce en tôle (3).

5. Fourche d'articulation selon l'une des revendications 1 à 4, **caractérisée en ce que** la fourche d'articulation (1) peut être réalisée sous la forme d'une pièce forgée (2) sans le composant séparé (3).

6. Fourche d'articulation selon la revendication 5, **caractérisée en ce que** la première joue (2a) et la nervure (2b) de la pièce forgée (2) se fondent l'une dans l'autre par le biais d'une pièce incurvée (2c) et **en ce qu'**un raccord de fixation (2d), coaxial à l'axe longitudinal (a) de l'alésage de fixation (6), est disposé dans la région de la pièce incurvée (2c).

7. Fourche d'articulation selon l'une des revendications précédentes, **caractérisée en ce que** les surfaces intérieures des joues comportent un moletage au moins par endroits.

8. Actionneur (8) comprenant un entraînement par broche, pourvu d'une broche et destiné à une direction d'essieu arrière d'un véhicule automobile, ledit actionneur comprenant au moins une fourche d'articulation (9, 10) reliée à la broche, **caractérisé en ce que** l'au moins une fourche d'articulation (9, 10) est conçue selon l'une des revendications précédentes.

9. Actionneur selon la revendication 8, **caractérisé en ce que** l'au moins une fourche d'articulation (9, 10) est reliée à une goupille à visser de la broche par le biais d'un boulon fileté placé à travers l'alésage de fixation (6).
